(19) Europäisches Patentamt / European Patent Office / Office européen des brevets

(11) **EP 3 068 551 B1**

(12) **EUROPÄISCHE PATENTSCHRIFT**

(45) Veröffentlichungstag und Bekanntmachung des Hinweises auf die Patenterteilung:
**15.03.2023** **Patentblatt 2023/11**

(21) Anmeldenummer: **14796127.0**

(22) Anmeldetag: **11.11.2014**

(51) Internationale Patentklassifikation (IPC):
**B05D 5/02** (2006.01)     **B29C 64/112** (2017.01)
**B33Y 10/00** (2015.01)     **B33Y 30/00** (2015.01)
**B33Y 70/10** (2020.01)     **B41J 11/00** (2006.01)

(52) Gemeinsame Patentklassifikation (CPC):
**B41J 11/00214; B05D 5/02; B29C 64/112;
B33Y 10/00; B33Y 30/00; B33Y 70/10**

(86) Internationale Anmeldenummer:
**PCT/EP2014/074287**

(87) Internationale Veröffentlichungsnummer:
**WO 2015/071269 (21.05.2015 Gazette 2015/20)**

(54) **ERZEUGUNG VON POLYMEREN PARTIKELN SOWIE RAUER BESCHICHUNGEN MITTELS INK-JET-DRUCK**

PRODUCTION OF POLYMER PARTICLES AND ROUGH COATINGS BY MEANS OF INKJET PRINTING

PRODUCTION DE PARTICULES POLYMÈRES ET DE REVÊTEMENTS RUGUEUX PAR IMPRESSION À JET D'ENCRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.11.2013   DE 102013112404**

(43) Veröffentlichungstag der Anmeldung:
**21.09.2016   Patentblatt 2016/38**

(73) Patentinhaber: **ACTEGA Schmid Rhyner AG
8134 Adliswil (CH)**

(72) Erfinder: **SCHLATTERBECK, Dirk
CH-9504 Friltschen (CH)**

(74) Vertreter: **Blumbach · Zinngrebe Patentanwälte PartG mbB
Alexandrastraße 5
65187 Wiesbaden (DE)**

(56) Entgegenhaltungen:
WO-A2-2012/049428     DE-A1- 10 045 994
DE-A1-102010 063 982   GB-A- 2 233 928

## Beschreibung

### Gebiet der Erfindung

Die Erfindung betrifft im Allgemeinen ein Verfahren zur Erzeugung von polymeren Partikeln und polymeren Strukturen bestehend aus Thermoplasten und/oder Elastomeren und/oder Duromeren im Folgenden als Partikel oder polymere Partikel referenziert. Im Speziellen betrifft die Erfindung insbesondere ein Verfahren zur Herstellung von rauen, polymeren Beschichtungen, ein Druckerzeugnis, umfassend ein Substrat oder Trägermaterial mit zumindest einer rauen, polymeren Beschichtung sowie eine entsprechende Vorrichtung zur Herstellung von rauen, polymeren Beschichtungen auf einem Substrat oder Trägermaterial.

Aus dem Stand der Technik sind Verfahren zur Erzeugung von dreidimensionalen Strukturen auf einem Substrat unter Verwendung eines Druckkopfes bekannt. Hierbei werden Partikel oder partikelhaltige Lösungen eingesetzt.

In der WO 2011/077200 A1 wird ein Verfahren beschrieben, bei dem beispielsweise Pigmente bzw. Glitter, Metall- oder Glaspartikel auf einem Substrat aufgebracht werden. Um eine Anhaftung der Partikel zu gewährleisten, weist das Substrat eine härtbare Beschichtung auf, die nach dem Aufbringen der Partikel gehärtet wird. Im beschriebenen Verfahren wird ein Klebstoff partiell auf das Substrat aufgetragen, anschließend werden die Partikel auf das Substrat aufgestreut. In einem nächsten Schritt wird der Klebstoff gehärtet und zuletzt werden die überschüssigen Partikel, die sich nicht im Bereich der Klebstoffbeschichtung auf dem Substrat befinden, abgesaugt oder anderweitig entfernt.

Die DE 10 2010 063 982 A1 beschreibt ein Verfahren zur Erzeugung von dreidimensionalen Strukturen auf einem Substrat, bei der eine Lösung mit Partikeln auch eine Düsenöffnung auf ein Substrat ausgestoßen wird. Während des Fluges verdunstet der Großteil des eingesetzten Lösungsmittels, so dass sich für jedes Tröpfchen eine dreidimensionale Struktur während des Fluges ausbildet.

Das Verfahren macht sich den im Normalfall unerwünschten Effekt zunutze, dass bei entsprechender Ansteuerung von Drop-on-Demand-(DOD) Inkjet-Köpfen, zusätzlich zum erwünschten Tropfen, Satellitentröpfchen entstehen. Im Extremfall kann die Ansteuerung so erfolgen, dass nur kleine Satellitentröpfchen gebildet werden. Auf diese Weise können wesentlich kleinere Tropfenmassen erzeugt werden, als es dem Düsendurchmesser des eingesetzten DOD Inkjet-Kopfes entsprechen würde. Diese Tröpfchen haben auf Grund ihrer Größe einen besonders hohen Dampfdruck, was das Ziel der Trocknung im Flug unterstützt.

Als Beschichtungszubereitungen werden beispielsweise kolloidale Tinten mit hochmonodispersen, organischen Polystyrol-Mikrosphären oder alternativ anorganische Silika-Mikrokugeln, also hoch spezielle Beschichtungsmittel eingesetzt. Die Auswahl an Beschichtungsmitteln ist daher in der DE 10 2010 063 982 A1 Zweck massiv eingeschränkt.

Beim beschriebenen Verfahren kommt es im Flug unter Verdunstung des Lösungsmittels zu einer Selbstorganisation der Mikroteilchen innerhalb der Tröpfchen zu kristallartigen sphärischen Aggregaten.

Zweck des Verfahrens ist es dann auch, durch die im Flug gebildeten Aggregate auf einfache und kostengünstige Weise aggregierte, dreidimensionale Strukturen mit speziellen photonischen Eigenschaften nach dem "Dry Self Assembly"-Verfahren erzeugen zu können und nicht auf speziell hochhydrophobe Substrate und dergleichen angewiesen zu sein.

Die WO 2012/049428 beschreibt ein Verfahren, bei dem partikelhaltige Suspensionen auf ein Substrat gesprüht werden und das Suspensionsmittel auf dem Substrat verdampft wird. Hierzu wird das Substrat von der Unterseite geheizt. Die versprühten Suspensionen enthalten Nanopartikel.

In den Schriften GB 2 233 928 B und US 5 059 266 wird ein 3D-Druckverfahren beschrieben, mit dessen Hilfe es gelingt, dreidimensionale Objekte zu erzeugen und hierbei UVhärtbare Tinten verschiedener Farbe oder mit unterschiedlichen Polymereigenschaften einzusetzen. Das Verfahren macht sich zunutze, dass durch das (teilweise) Härten der Tröpfchen im Flug die Mischung der Farben untereinander vermieden werden kann, da die vorgehärteten Tröpfchen sehr hochviskos oder sogar fest sind.

Eine weitere Bauform des Druckverfahrens betrifft die Platzierung der Inkjet-Maschine in ein Gehäuse, dass durch Evakuieren und anschließendem Befüllen mit Inertgas komplett in einer Inertgasatmosphäre betrieben werden kann. Auf diese Weise wird die der radikalischen Polymerisation von ungesättigten Acrylatverbindungen inhärente Problematik der sogenannten Sauerstoffinhibierung unterdrückt. Sauerstoff besitzt die Eigenschaft, die Radikalkettenreaktion durch Anlagerung an die reaktiven Radikale zu unterbrechen und somit eine vollständige Polymerisation zu unterbinden oder wenigstens zu erschweren. Auch wenn durch geeignete Zusatzstoffe diese Inhibierung unterbunden werden kann, ist es doch energetisch günstiger, durch Verwendung einer Inertgasatmosphäre diese Inhibierung auszuschließen. Zudem kann auf die genannten Zusatzstoffe verzichtet werden.

In der DE 10 2010 063 982 A1 ist die Erzeugung der kristallartigen Arrays von Bedeutung, wobei hier speziell die optischen Eigenschaften der Mikrokristalle genutzt werden sollen, wohingegen die mechanischen und ästhetischen oder andere funktionelle Eigenschaften der Beschichtung keine Rolle spielen. In GB 2 233 928 B und US 5 059 266 geht es um die Erreichung einer dreidimensionalen Form und nicht um Beschichtungen im eigentlichen Sinn.

Mit Beschichtungen im Allgemeinen möchte man die unterschiedlichsten Material- und Oberflächeneigenschaften und -funktionen erzielen. Bei der Verwendung von flüssigen Beschichtungsmitteln können hierzu sowohl flüssige als auch feste Bestandteile eingesetzt werden. Die Verwendung fester Bestandteile erfolgt dabei aus den unterschiedlichsten Absichten. So können beispielsweise Feststoffe eingesetzt werden um die Beschichtung zu mattieren oder um einen Einfluss auf die Oberflächeneigenschaften wie z.B. die Gleitreibung zu nehmen. Nachteilig an dieser Vorgehensweise ist, dass die Partikel im Beschichtungsmaterial gleichmäßig verteilt sind und daher nicht spezifisch an die Oberfläche gebracht werden können. Des Weiteren können Partikel in Beschichtungen enthalten sein, um die mechanischen Eigenschaften der Beschichtung zu beeinflussen. So können Partikel beispielsweise Beschichtungen zugegeben werden, um deren Kratzfestigkeit zu verbessern. Auch ist der Einsatz von Pigmenten üblich. Weiterhin können auch die Leitfähigkeit oder magnetische Eigenschaften von Beschichtungen durch die Verwendung von Partikeln beeinflusst werden. Bei all den genannten Materialtypen gibt es Vertreter, die ihre Wirkung auf Grund einer gewissen Partikelgröße entfalten, wodurch sie nicht beliebig klein hergestellt werden können.

Beim Einsatz von Inkjet sind auf Grund der kleinen Düsendurchmesser im Mikrometerbereich dem Einsatz von Partikeln Grenzen gesetzt. Zu große Partikel können die Düsen blockieren und somit den Inkjet-Kopf ggf. zerstören. Neben diesem Risiko sind Partikel, mit Durchmessern die größer als die Düsendurchmesser sind, durch Inkjet nicht zu verarbeiten.

Die EP 1 037 716 B1 bzw. DE 698 22 201 T2 betrifft Mehrschichtstrukturen, hergestellt mit kontrollierten Tröpfchen sowie Verfahren zu deren Herstellung.

Aufgabe der Erfindung

Die hier vorgestellte Erfindung befasst sich mit polymeren Partikeln und Beschichtungen, die aus fluiden Zubereitungen mittels Inkjet-Technologie erzeugt werden.

Das erfindungsgemäße Verfahren löst das Problem, die Aufbringung von Partikeln unter Verwendung von Inkjet-Technologie zu ermöglichen. Hierbei macht man sich die Eigenschaft der Inkjet-Technologie zunutze, dass unter digitaler Ansteuerung der Düsen die Partikel zeitlich und örtlich gezielt appliziert werden können.

Ein weiterer Vorteil der Inkjet-Technologie zur erfindungsgemäßen Erzeugung der Partikel liegt in der Flexibilität des Verfahrens bezüglich der Partikelgröße. Nicht nur kann durch geeignet Auswahl des Druckkopfs hinsichtlich Düsengröße und erzielbarer Auflösung gezielt Einfluss auf die Tropfengröße und Positioniergenauigkeit genommen werden, auch durch die Beeinflussung der Ansteuerung der Düsen ist die Tropfengröße in weiten Bereichen einstellbar, sogar in Bereiche hinein, die wesentlich kleiner sind als das spezifizierte Tropfenvolumen eines Kopfes, indem man sich die Methode aus der DE 10 2010 063 982 A1 zunutze macht und die Köpfe gezielt mit einen für Einzeltropfen ungeeigneten Signal ansteuert.

Bei dem erfindungsgemäßen Verfahren werden vorzugsweise fluide Zubereitungen zur Verarbeitung mit Ink-Jet-Düsen ohne Feststoffanteile verwendet. Die Partikel werden also gewissermaßen in situ erzeugt. Ein Verstopfen der Düsenöffnung wird aufgrund des fehlenden Feststoffgehalts vermieden. Es können somit größere Partikelgrößen als bei der Verwendung von Dispersionen erhalten werden. Zudem ist die in situ Erzeugung der Partikel vorteilhaft, da somit beispielsweise auf eine entsprechende Matrix oder zusätzliche Bindemittel und/oder Hilfsstoffe zur Partikelstabilisierung in der entsprechenden fluiden Zubereitung verzichtet werden kann.

Eine Aufgabe der vorliegenden Erfindung besteht in der Bereitstellung eines Verfahrens zur Erzeugung von polymeren Partikeln unter Verwendung eines Ink-Jet-Druckkopfes.

Mit dem Verfahren können insbesondere raue, polymere Beschichtungen auf Substrate appliziert werden. Unter einer rauen Beschichtung wird insbesondere auch eine Beschichtung verstanden, deren Oberfläche uneben bzw. strukturiert ist. Solche Beschichtungen werden in der Fachliteratur auch als Strukturlack bezeichnet. Eine weitere Aufgabe der Erfindung liegt in der Bereitstellung einer Vorrichtung zur Beschichtung von Substraten mit rauen, polymeren Beschichtungen mittels Ink-Jet-Druck sowie in der Bereitstellung von Substraten mit rauen, polymeren Beschichtungen.

Die Aufgabe wird bereits durch den Gegenstand der unabhängigen Ansprüche gelöst. Vorteilhafte Ausgestaltungen und Weiterbildungen sind Gegenstand der Unteransprüche.

Beschreibung der Erfindung

Das erfindungsgemäße Verfahren zur Herstellung von Polymerpartikeln sieht vor, dass eine fluide Zubereitung zur Verarbeitung mit In-Jet-Düsen mittels eines Ink-Jet-Druckkopfes in Form von Tropfen aus der Düse ausgestoßen durch Strahlung im Flug zumindest teilweise gehärtet wird, so dass vor dem Auftreffen oder Auffangen aus den fluiden Tropfen polymere Partikel erhalten werden. Der Ink-Jet-Druckkopf weist dabei zumindest eine Düse auf, mit der unter Ansprechen auf elektrische Signale die fluide Zubereitung zur Verarbeitung mit Ink-Jet-Düsen als fluide Tropfen ausgestoßen werden.

Insbesondere können mit dem Verfahren vor dem Auftreffen oder Auffangen auf ein Substrat oder Trägermaterial aus den fluiden Tropfen polymere, kugelförmige oder weitgehend kugelförmig ausgebildete Partikel erhalten werden.

Die Härtung erfolgt dabei durch Polymerisations- und/oder Vernetzungsreaktionen. Die erfindungsgemäße fluide Zubereitung umfasst zumindest ein Präpolymer und/oder ein Monomer, welches zumindest eine polymerisierbare Gruppe aufweist. Die polymerisierbare Gruppe ist dabei radikalisch polymerisierbar und/oder vernetzbar. Insbesondere handelt es sich bei der fluiden Zubereitung zur Verarbeitung mit Ink-Jet-Düsen z.B. um eine Lösung mindestens eines Präpolymers, Oligomers und/oder Monomers in einem Reaktivverdünner.

Des Weiteren enthält die fluide Zubereitung zur Verarbeitung mit Ink-Jet-Düsen mindestens einen Photoinitiator, wobei unter einem Photoinitiator im Sinne der Erfindung sowohl ein Photoinitiator als auch ein Photosensibilisator und/oder ein Synergist verstanden wird.

Unter Verwendung einer Strahlungsquelle wird auf die im Flug befindlichen Tropfen dabei mittels einer Strahlungsquelle Strahlung gerichtet. Denkbar wäre auch eine Härtung durch Elektronenstrahl.

Photoinitiator und Wellenlänge der Strahlung sind bei der Härtung durch Strahlung im UV- oder VIS-Bereich dabei derart aufeinander abgestimmt, dass der Photoinitiator unter Einwirkung der Strahlung eine radikalische Polymerisation und/oder Vernetzung der polymerisierbaren Gruppen der Präpolymere und/oder der Monomere auslöst.

Gemäß einer Ausführungsform enthält die fluide Zubereitung zur Verarbeitung mit Ink-Jet-Düsen Präpolymere und/oder Monomere, welche zumindest zwei polymerisierbare Gruppen pro Präpolymerkette bzw. Monomer aufweisen. Dies ist in Hinblick auf eine Vernetzung der einzelnen Polymerketten besonders vorteilhaft.

Durch die Verwendung eines Ink-Jet-Druckkopfes sowie der Härtung der fluiden Zubereitung zur Verarbeitung mit Ink-Jet-Düsen in Tropfenform während des Fluges ist es möglich, entsprechende fluide Zubereitungen mit niedrigen Viskositäten einzusetzen, was insbesondere in Hinblick auf die Prozessierbarkeit vorteilhaft ist. Weiterhin erfolgt die Formbildung der Partikel durch die Verfahrensparameter, insbesondere durch die Ausstoßbedingungen des verwendeten Druckkopfes sowie durch die Härtung der Partikel während des Fluges, so dass beispielsweise auf selbstorganisierende oder partikuläre Bestandteile in der fluiden Zubereitungen zur Verwendung mit Ink-Jet-Düsen verzichtet werden kann. Somit steht eine große Auswahl an geeigneten Präpolymeren und Monomeren zur Verfügung.

Durch die erfindungsgemäße Einwirkung der Strahlung auf die Tropfen während des Fluges kommt es zu einer zumindest teilweisen Härtung der einzelnen Tropfen wobei die Härtung vom flüssigen über einen Gel- und einen Sol/Gel-Zustand in den festen Zustand verläuft. Der erreichbare Zustand hängt unter anderem von der UV-Dosis ab. Hierbei kann entweder unter gezielter Ausnutzung der Sauerstoffinhibierung der Tropfen im Volumen ausgehärtet werden, wobei der Tropfen auf der Oberfläche klebrig bleibt. Oder es kann durch Abstimmung der Wellenlänge des verwendeten UV-Lichts in Kombination mit Photoinitiatoren und ggf. dem Einsatz von UV-Absorbern nur die Oberfläche gehärtet werden. Selbstverständlich kann durch geeignete Auswahl der Komponenten und der UV-Strahlungsquelle auch ein vollständige Oberflächen- und Durchhärtung erzielt werden. Durch die Härtung wird eine Formstabilität gewährleistet, so dass polymere Partikel erhalten werden.

Gemäß einem weiteren Aspekt der Erfindung ist auch angedacht, anorganische oder hybridpolymere Fluide als Ink-Jet-Fluid oder Bestandteil des Ink-Jet-Fluids zu verwenden. Auf diese Weise lassen sich entsprechende anorganische oder hybridpolymere Partikel in loser Form oder als raue Beschichtung analog dem Sol/Gel Verfahren erzeugen. Eine Härtung im Flug erfolgt hier anstelle einer strahlungsinduzierten Vernetzung und/oder Polymerisierung durch Verdampfen eines Lösungsmittels. Strahlungsinduzierte Vernetzung und/oder Polymerisierung kann mit dieser Ausführungsform bei Zugabe geeigneter Formulierungsbestandteile zusätzlich erfolgen.

Im Folgenden wird nicht mehr auf die vorstehend genannte Härtung durch Verdampfung eines Lösungsmittels, sondern auf die erfindungsgemäße Härtung durch Polymerisations- und/oder Vernetzungsreaktionen Bezug genommen.

Abhängig von der applizierten UV-Dosis können die erhaltenen Partikel vollständig oder teilweise ausgehärtet sein. Ein hoher Polymerisationsgrad und/oder Vernetzungsgrad innerhalb der Tropfen führt dabei zu einem hohen Härtungsgrad. Eine Erhöhung des Härtungsgrades führt dabei zu einer Erhöhung der Viskosität.

Gemäß einer Ausführungsform sind die erhaltenen Partikel vorwiegend in den Randbereichen bzw. oberflächennahen Bereichen ausgehärtet, während die Zubereitung zur Verarbeitung mit Ink-Jet-Düsen im Inneren der Partikel noch fluide Eigenschaften und/oder eine niedrigere Viskosität als in den Randbereichen aufweist. Die Tropfenform hat sich dabei für eine gleichmäßige Härtung von den Randbereichen zur Tropfenmitte als besonders vorteilhaft herausgestellt und ermöglicht eine kontrollierte Härtung. So können im erfindungsgemäßen Verfahren der Härtungsgrad und somit Partikeleigenschaften wie Formstabilität oder Klebrigkeit durch die Wahl der einzelnen Verfahrensparameter wie beispielsweise die Flugzeit, das Volumen der ausgestoßenen Tropfen oder die Intensität und Wellenlänge der eingestrahlten Strahlung eingestellt werden. Ebenfalls kann der Härtungsgrad durch die Bestandteile der eingesetzten fluiden Zubereitung zur Verarbeitung mit Ink-Jet-Düsen sowie deren Zusammensetzung beeinflusst werden. Somit ist es möglich, polymere Partikel mit maßgeschneiderten Eigenschaften zu erhalten.

Gemäß einer Ausführungsform der Erfindung weisen die Partikel lokal also unterschiedliche Härtungsgrade aus. So kann beispielsweise der Härtungsgrad an der Partikeloberfläche oder in oberflächennahen Bereichen höher sein als im Inneren der Partikel.

Insbesondere wird zur Härtung eine Strahlungsquelle verwendet, die Licht im UV-VIS-Bereich ausstrahlt. Eine Ausführungsform der Erfindung sieht die Verwendung von Licht im UV-Bereich vor. Durch den Einsatz von LED- oder Laserstrahlungsquellen können auch monochromatische oder in einem sehr engen Wellenlängenbereich liegende Strahlen einer in weiten Grenzen einstellbaren Wellenlänge zur Härtung eingesetzt werden. Damit kann die Härtung der Tropfen gegenüber anderen in der Umgebung oder schon auf dem Substrat oder Trägermaterial befindlichen UV-härtbaren Materialien selektiv gesteuert werden, so dass entweder die Tropfen zu polymeren Partikeln gehärtet werden oder die Beschichtung auf dem Substrat oder Trägermaterial (vor)gehärtet wird und somit unterschiedliche Effekte bezüglich der resultierenden Oberflächeneigenschaften erzielt werden.

Eine Weiterbildung der Erfindung sieht vor, Licht mit einer Wellenlänge im Bereich von 150 bis 700 nm, vorzugsweise mit einer Wellenlänge im Bereich von 200 bis 500 nm einzustrahlen. Durch Auswahl des eingestrahlten Wellenlängenbereichs (bzw. des gegenüber diesem Wellenlängenbereiche sensiblen Photoinitiators) kann beeinflusst werden, ob der Tropfen vorwiegend an den Randbereichen gehärtet wird oder in wieweit eine Härtung auch im Inneren des Tropfens stattfindet, da die Eindringtiefe des Lichtes mit dessen Wellenlänge korreliert.

Gemäß einer weiteren Ausführungsform der Erfindung wird Licht mit einer Wellenlänge im Bereich von 350 bis 700 nm eingestrahlt. Die Einstrahlung von langwelligem Licht ist dabei besonders vorteilhaft, wenn die Tropfen während des Fluges auch im Inneren gehärtet werden sollen, da die bei den obengenannten Wellenlängenbereichen große Eindringtiefen erzielt werden können, so dass auch im Inneren des Tropfens eine Härtung der eingesetzten fluiden Zubereitung zur Verwendung mit Ink-Jet-Düsen erfolgen kann. Gegebenenfalls zuvor aufgebrachte oder nachfolgend aufgebrachte Schichten und die Partikel können so selektiv ausgehärtet werden, wenn die Materialien der Schicht und der Partikel für unterschiedliche Wellenlängen empfindlich sind.

Des Weiteren kann die Verwendung von langwelligerem Licht bei der Verwendung von fluiden Zubereitungen, die Farbmittel enthalten, vorteilhaft sein, da langwelligeres Licht meist von den Farbmitteln weniger stark absorbiert wird als kurzwelligeres Licht. Generell kann die Wellenlänge des zur Härtung eingesetzten Lichtes so an die Absorptionseigenschaften der in der fluiden Zubereitung enthaltenen Farbmittel angepasst werden, dass ein zur Härtung ausreichender Anteil des eingestrahlten Lichtes transmittiert.

Das Auffangen kann gemäß einer Ausführungsform der Erfindung so erfolgen, beispielsweise in einem geeigneten Behälter, dass lose, nicht miteinander verbundene Polymerpartikel erhalten werden. Durch die Oberflächenspannung werden diese Polymerpartikel rund bis kugelförmig. Im Gegensatz zu durch Mikronisierung (z.B. Sprüh-Mikronisierung oder Mahlprozesse) erzeugten Partikeln zeichnen sich die erfindungsgemäß herstellbaren Partikel durch eine sehr enge und homogene Größenverteilung aus. Spricht man in einem Fall von einer gewissen, beispielsweise gaußförmigen Verteilung mit einer breiten Streuung und der Charakterisierung beispielsweise durch $D_{50}$ und/oder $D_{99}$-Werte ist durch die erfindungsgemäße Art der Partikelerzeugung die Partikelgröße festgelegt. Die Partikelgröße ergibt sich idealerweise (optimaler Tropfenbildungsprozess ohne Satelliten) aus den im Ink-Jet-Prozess eingestellten Parametern. Es ist aber auch möglich, durch Variation der Parameter, wie Pulsform und Amplitude gezielt eine gewünschte Größenverteilung zu erzielen. Eine geeignete Ansteuerung ist, wie oben dargelegt, in der DE 10 2010 063 982 A1 beschrieben.

Für derartige Polymer-Mikrokugeln ergeben sich eine Vielzahl von Anwendungsmöglichkeiten, beispielsweise als Mikrooptiken, lichtbrechende oder lichtreflektierende Elemente, Additive, insbesondere für Beschichtungsmittel, als Füllstoff oder auch als Gleitmittel, sowie auch als Pigment. Die runde Form der Partikel kann auch sehr vorteilhaft sein, wenn die Partikel als Beschichtung auf einem Substrat oder Trägermaterial aufgebracht werden. Eine mögliche Anwendung hierbei ist eine Reflektorbeschichtung. Dabei reflektieren die Mikrokugeln einfallendes Licht zurück in die Lichteinfallsrichtung.

Als weiterer Verfahrensschritt kann gemäß dieser Ausführungsform der Erfindung das Herstellen einer Beschichtung mit den Partikeln erfolgen.

Gemäß einer bevorzugten Weiterbildung des erfindungsgemäßen Herstellungsverfahrens können mittels Ink-Jet-Druck raue Beschichtungen auch direkt auf einem Substrat oder Trägermaterial erzeugt werden.

Die rauen Beschichtungen werden im Folgenden auch als erste Beschichtungen bezeichnet. Anders ausgedrückt wird die erste Beschichtung durch die aufgebrachte fluide Zubereitung zur Verarbeitung mit Ink-Jet-Düsen erhalten. Die Bezeichnungen "erste" und "zweite" Beschichtung dient dabei zur sprachlichen Unterscheidung der verschiedenen Beschichtungen, kennzeichnet jedoch nicht die Abfolge der jeweiligen Beschichtungen auf einem mehrfach beschichteten Substrat oder Trägermaterial. So kann beispielsweise ein erfindungsgemäß beschichtetes Substrat oder Trägermaterial auch lediglich eine erste Beschichtung aufweisen.

Das entsprechende Herstellungsverfahren weist dabei zumindest die Verfahrensschritte a) bis d) auf, welche im Folgenden näher erläutert werden.

In Schritt a) wird zunächst die fluide Zubereitung zur Verarbeitung mit Ink-Jet-Düsen sowie ein Substrat oder Trägermaterial bereitgestellt. Bei dem Substrat oder Trägermaterial handelt es sich dabei insbesondere um ein bedruckbares und/oder bedrucktes Substrat oder ein entsprechendes Trägermaterial. Als Substrate oder Trägermaterialien können beispielsweise, aber nicht ausschließlich, Druckmedien wie Papiererzeugnisse oder Kunststofffolien verwendet werden. Wenn nachfolgend Substrate genannt werden, sind damit alternativ auch immer Trägermaterialien gemeint. Auch die Verwendung von gläsernen oder metallischen Substraten, sowie von Holz oder Kunststoff in Folien- oder Plattenform, beispielsweise von Werkstoffen, wie sie für den Möbelbau oder für Bodenbeläge verwendet werden, ist möglich. Die Substrate können sowohl flexibel als auch starr sein.

Im nachfolgenden Schritt b) erfolgt ein dosiertes Austreten der fluiden Zubereitung zur Verarbeitung mit Ink-Jet-Düsen durch den Druckkopf, wobei sich das Substrat oder Teile des Substrates unterhalb des Druckkopfes befinden und Substrat und Druckkopf voneinander beabstandet sind. Durch den Druckkopf wird die entsprechende fluide Zubereitung in Form von einzelnen, voneinander getrennten, fluiden Tropfen freigesetzt.

Die Tropfen fallen in Schritt c) für die Dauer der Flugzeit vom Druckkopf auf das vom Druckkopf beabstandete Substrat. In den Bereich zwischen Druckkopf und Substrat wird mittels einer Strahlungsquelle Strahlung, insbesondere ultraviolette Strahlung und/ oder Strahlung im sichtbaren Spektralbereich (UV-VIS-Bereich), eingestrahlt, so dass die Tropfen während der Flugzeit durch die Einwirkung von Strahlung zumindest teilweise gehärtet werden.

Die zumindest teilweise gehärteten Tropfen bzw. die so erhaltenen polymeren Partikel treffen nach Beendigung der Flugzeit in Schritt d) auf dem Substrat auf und bilden eine raue, beziehungsweise strukturierte oder unebene Beschichtung. Eine solche Beschichtung kann matt sein, einen haptischen Effekt (Sandeffekt und dgl.) aufweisen, besonders gleitfähig, besonders wenig gleitfähig (beispielsweise als Anti-Rutsch-Beschichtung), aber auch visuell funktionalisiert (Farbtupfer, Glanzpunkte mit Metallurpigmenten etc.) sein.

Der Vorteil der erfindungsgemäßen Aufbringung der Partikel zur Erreichung von Oberflächeneffekten liegt u.a. darin, dass die Partikel gezielt auf die Oberfläche wirken und nicht über das Volumen des Beschichtungsmittels in der gesamten Schicht vorhanden sind und nur ein kleiner Teil der Konzentration an der Oberfläche seine Wirkung entfaltet.

Die Anhaftung der Beschichtung auf dem Substrat sowie der Partikel untereinander wird dabei insbesondere durch Form und Klebrigkeit der Partikel und der Oberfläche oder einer gegebenenfalls vorhandenen Beschichtung des Substrats bestimmt.

Unter dem Begriff "Klebrigkeit" im Sinne der Erfindung wird dabei das Adhäsionsvermögen der Partikel verstanden. Die Klebrigkeit wirkt sich dabei sowohl auf die Anhaftung der Partikel innerhalb der Beschichtung als auch auf die Anhaftung der Partikel und somit der Beschichtung auf dem Substrat auf. Diese Eigenschaften werden z.B. im Bereich der Haftklebstoffe (pressure sensitive adhesives PSA) unter dem Begriff "dynamische Adhäsion" beschrieben. Die Klebrigkeit wird insbesondere durch den Härtungsgrad an der Oberfläche der Partikel bestimmt. Dabei führt ein hoher Härtungsgrad an der Partikeloberfläche bzw. in den oberflächennahen Bereichen der Partikel zu einer eher geringen Klebrigkeit der Partikel.

Die Intensität der Strahlung der verwendeten Strahlungsquelle wirkt sich auf den Härtungsgrad aus, wobei eine hohe Strahlungsintensität zu einem hohen Härtungsgrad führt.

Gemäß einer Ausführungsform wird die raue Beschichtung auf dem Substrat lateral strukturiert aufgebracht. So können beispielsweise gezielt lediglich Teilbereiche des Substrates mit der rauen Beschichtung, beziehungsweise mit den erfindungsgemäß erzeugten Partikeln versehen werden, während andere Teilbereiche des Substrates nicht beschichtet werden.

Allgemein kann durch Einstellung der Flächendichte (Anzahl Partikel pro Flächeneinheit) und/oder der Partikelgröße eine Oberfläche gezielt in gewünschten Bereichen Matt- oder Glanzeffekte erzielt werden. Generell können auch Gradienten des Mattierungsgrades oder haptischer Effekte in einfacher Weise durch entsprechende Ansteuerung des Druckkopfs und damit durch lateral variierende Flächendichten und/oder Partikelgrößen erzeugt werden. Durch geeignete Wahl des Beschichtungsmaterials und der Beschichtungsparameter kann die Art des haptischen Effekts beeinflusst werden. Die Haptik kann zwischen Sandlack- oder Schleifpapiereffekten bis hin zu Soft-Touch-Eigenschaften variiert werden. Durch die Beeinflussung der Schichtdicke können diese Eigenschaften durch ein zusätzliches Relief verstärkt werden. Mit Sandlack wird ein Strukturlack bezeichnet, der eine sandpapierähnliche Struktur und Haptik aufweist. Auch ist es möglich, die Oberflächen chemisch zu funktionalisieren wie es z.B. bei Ormoceren der 1. bis 3. Generation bekannt ist.

Bei geeigneter Materialwahl können mit der Erfindung auch siegelbare Bereiche hergestellt werden. Beispielsweise können die Partikel dazu heißschmelzbar ausgebildet werden. Auch ist eine thermische Nachvernetzung denkbar.

In einer weiteren Ausführungsform beträgt die Flugzeit der Tropfen vom Ausstoß aus dem Druckkopf bis zum Auftreffen auf dem Substrat höchstens 10 ms, vorzugsweise höchstens 5 ms, besonders bevorzugt weniger als 1,5 ms. Bei kleinen Abständen des Druckkopfs von der zu beschichteten Oberfläche kann die Flugzeit auch noch deutlich geringer sein. Insbesondere kann die Flugzeit dabei auch weniger als 0,5 ms betragen. Auch diese kurzen Flugzeiten ermöglichen noch eine ausreichende Härtung der Partikel während des Fluges, so dass formstabile polymere Partikel und/oder polymere Partikel mit einer formstabilen Hülle erhalten werden. Gemäß noch einer Weiterbildung der Erfindung beträgt die Flugzeit aber mindestens als 0,05 ms

Die in Schritt b) gebildeten Tropfen weisen gemäß einer Weiterbildung der Erfindung eine Geschwindigkeit von 0,5 bis 14 m/s, bevorzugt 1 bis 12 m/s, insbesondere bevorzugt 3 m/s bis 8 m/s auf.

Die Tropfengröße und die Bildung von Satelliten, allgemein die Art der Tropfenbildung und damit Form und Größe der aus den Tropfen gebildeten Partikel können gemäß noch einer Weiterbildung der Erfindung durch die Einstellung der Form der elektrischen Pulse, mit welchen die Düsen angesteuert werden, beeinflusst werden. Die Pulsform kann auch so eingestellt werden, dass nicht ein einzelner großer Tropfen, sondern mehrere etwa gleich große Tropfen pro Puls erzeugt werden. Dies kann für die Erfindung von Vorteil sein, um kleine Partikel zu erzeugen.

Vorzugsweise werden für die Erfindung Piezo-Jet-Düsen verwendet. Bei diesen Düsen erfolgt durch den elektrischen Puls eine Verformung eines piezoelektrischen Materials, und dadurch eine Schall- oder Druckwelle, wodurch das Beschichtungsmaterial in Form von Tropfen durch die Düse ausgestoßen wird. Die Pulse werden durch eine Steuereinrichtung, typischerweise rechnergesteuert erzeugt.

Durch die Geschwindigkeit der Tropfen sowie den Abstand vom Druckkopf zum Substrat kann deren Flugzeit eingestellt werden. Zudem können sich Druck und Geschwindigkeit auf die Form der Tropfen und somit auf die Form der gehärteten Partikel auswirken. So kann beispielsweise eine hohe Geschwindigkeit eine Deformation der Partikel beim Auftreffen auf die Substratoberfläche zu Folge haben, wobei dieser Effekt besonders bei teilgehärteten Partikeln mit einem geringen Härtungsgrad ausgeprägt sein kann. Des Weiteren kann insbesondere bei Tropfen bzw. Partikeln mit einem geringen Härtungsgrad deren Form durch die Oberflächenspannung des Tropfens, den Härtungsgrad der Oberfläche oder Wechselwirkungen zwischen Tropfen und Substrat (beispielsweise hydrophobe oder hydrophile Wechselwirkungen) beeinflusst werden.

In einer Weiterbildung der Erfindung weist das in Schritt a) bereitgestellte Substrat eine zweite, härtbare Beschichtung auf. Die zweite Beschichtung enthält ein drittes Präpolymer und/oder ein drittes Monomer mit einer dritten polymerisierbaren Gruppe und ist noch nicht oder zumindest noch nicht vollständig ausgehärtet. Die zweite Beschichtung wird erst nach dem Auftreffen der in Schritt b) erzeugten polymeren Partikel ausgehärtet, so dass die Partikel nach dem Auftreffen auf der zweiten Beschichtung anhaften. Gemäß einer Ausführungsform dieser Weiterbildung wird die zweite Beschichtung durch Polymerisation und/oder Vernetzung der dritten polymerisierbaren Gruppe in Schritt c) ausgehärtet. Eine andere Ausführungsform sieht eine Härtung der zweiten Beschichtung durch Reaktion der dritten polymerisierbaren Gruppe in einem dem Schritt d) nachfolgenden Schritt e) vor.

Ein Aushärten der zweiten Beschichtung mit dem dritten Präpolymer bzw. Monomer nach dem Auftreffen der Partikel führt zu einer verbesserten Anhaftung der polymeren Partikel auf dem beschichteten Substrat. Somit kann die zweite Beschichtung mit dem dritten Präpolymer bzw. Monomer als Haftvermittler bzw. Haftverstärker eingesetzt werden.

In einer Weiterbildung der Erfindung enthält die fluide Zubereitung zur Verarbeitung mit Ink-Jet-Düsen ein Präpolymer, welches neben der ersten polymerisierbaren Gruppe zumindest eine zweite polymerisierbare Gruppe aufweist, wobei die erste und die zweite polymerisierbare Gruppe nicht identisch sind und die zweite polymerisierbare Gruppe gegenüber den Polymerisationsbedingungen der ersten Gruppe inert oder zumindest weitgehend inert ist. Die zweite polymerisierbare Gruppe führt insbesondere zu einer Vernetzung der Präpolymerketten. Eine Ausführungsform der Erfindung sieht vor, dass während des Fluges die erste polymerisierbare Gruppe reagiert und somit zu einer Härtung des Tropfens führt. Da die zweite polymerisierbare Gruppe unter den entsprechenden Reaktionsbedingungen nicht oder nur im geringen Ausmaße reagiert, stehen diese Gruppen zur Vernetzung der abgeschiedenen Beschichtung zur Verfügung. Durch Reaktion der zweiten polymerisierbaren Gruppen kann in einem nachfolgenden Verfahrensschritt so beispielsweise eine Vernetzung der Partikel untereinander erfolgen. Über den Vernetzungsgrad der zweiten polymerisierbaren Gruppen können somit Beschichtungseigenschaften wie die Porösität der Beschichtung oder deren Abriebfestigkeit eingestellt werden.

Eine Weiterbildung der Erfindung sieht vor, dass die zweiten polymerisierbaren Gruppen derart ausgestaltet sind, dass in einem weiteren Verfahrensschritt eine Oberflächenfunktionalisierung der Partikel erfolgen kann. Insbesondere kann die zweite polymerisierbare Gruppe eine Ankergruppe für selektive chemische Reaktionen umfasst. In dieser Ausführungsform kann die Beschichtung beispielsweise Sensor- und/oder Indikatoreigenschaften aufweisen.

Alternativ oder zusätzlich kann die fluide Zubereitung zur Verarbeitung mit Ink-Jet-Düsen auch ein Monomer mit einer ersten und einer zweiten polymerisierbaren Gruppe enthalten, wobei die erste und die zweite polymerisierbare Gruppe nicht identisch sind und die zweite polymerisierbare Gruppe gegenüber den Polymerisationsbedingungen der ersten Gruppe inert oder zumindest weitgehend inert ist. In dieser Ausführungsform der Erfindung können somit die auf dem Substrat abgeschiedenen Partikel in einem nachfolgenden Schritt weiter ausgehärtet und/oder untereinander vernetzt werden.

Alternativ oder zusätzlich kann in Schritt a) ein beschichtetes Substrat mit einer dritten polymerisierbaren Gruppe gemäß der oben beschriebenen Weiterbildung der Erfindung bereitgestellt werden. Sowohl die zweite als auch die dritte polymerisierbare Gruppe werden in dieser Ausführungsform in Schritt e) polymerisiert. Bei der zweiten und der dritten polymerisierbaren Gruppe kann es sich um verschiedene oder gleiche funktionelle Gruppen handeln. Insbesondere sind die zweite und die dritte polymerisierbare Gruppe derart ausgebildet, dass Polymerisations- und/oder Vernetzungsreaktionen der zweiten mit der dritten polymerisierbaren Gruppe stattfinden können. Durch die gleichzeitige Polymerisation der zweiten und der dritten polymerisierbaren Gruppe kann somit eine kovalente Anbindung der Partikel an das beschichtete Substrat erfolgen.

Gemäß einer Weiterbildung der Erfindung werden die Schritte c) und d) auf Teilbereichen des beschichteten Substrates wiederholt, so dass eine dreidimensional strukturierte raue Beschichtung erhalten wird.

Eine Herstellung von solchen dreidimensionalen Strukturen ist auch möglich, indem in einem Beschichtungsvorgang so viele Partikel pro Flächeneinheit aufgebracht werden, dass die Partikel sich zumindest teilweise übereinander ablagern.

Des Weiteren betrifft die Erfindung ein bedrucktes oder bedruckbares Substrat mit einer ersten, rauen, polymeren Beschichtung, wobei die Beschichtung durch polymere, insbesondere kugelförmige oder weitgehend kugelförmig ausgebildete Partikel gebildet wird.

Die polymeren Partikel der Beschichtung können ganz oder teilweise ausgehärtet sein. Gemäß einer Ausführungsform weisen die Partikel in unterschiedlichen Bereichen unterschiedliche Härtungsgrade auf. Insbesondere ist in dieser Ausführungsform der Härtungsgrad an der Oberfläche der Partikel und/oder in oberflächennahen Bereichen der Partikel höher als in der Partikelmitte. D.h. der Härtungsgrad kann in Abhängigkeit vom Radius als Funktion der Strahlungsdosis, der Wellenlänge, der Tröpfchengröße etc. einen Gradienten aufweisen.

So kann eine raue Beschichtung erhalten werden, bei denen die Partikel eine feste Hülle und einen fluiden, klebrigen Kern aufweisen. Die Partikel können dabei derart ausgebildet sein, dass die Hülle bei Krafteinwirkung platzt und das Partikelinnere freigesetzt wird. Derartige Beschichtungen können beispielsweise als Mehrkomponentensysteme und/oder in der Fügetechnik verwendet werden (PSA, Pressure Sensitive Adhesive). Eine feste Verklebung kann dann durch erneutes Aushärten des freigesetzten Beschichtungsmaterials erfolgen, wobei es zu einer Nachvernetzung kommt.

Insbesondere weisen die Partikel der Beschichtung ein durchschnittliches Volumen von 0.01 bis 500 Picolitern, vorzugsweise 0,1 bis 150, besonders bevorzugt 0,1 bis 25 Picolitern auf.

Gemäß einer Ausführungsform kann es sich bei den rauen Beschichtungen um poröse Beschichtungen handeln. Die Porosität der Beschichtung kann dabei über die Partikelgröße bzw. das Partikelvolumen eingestellt werden.

Abhängig von der Porosität der rauen Beschichtung können diese beispielsweise als Membranen, beispielsweise semipermeable Membranen oder Filter verwendet werden.

Die Partikel der Beschichtung können untereinander vernetzt sein. Durch die Vernetzung der Partikel kann die Festigkeit der rauen Beschichtung eingestellt werden, wobei die Vernetzung chemisch aber auch physikalisch vorliegen kann. Zudem führt eine Vernetzung der Partikel innerhalb der Beschichtung zu einer Verringerung der Porösität. Die rauen Beschichtungen können als Anti-Rutschbeschichtungen verwendet werden.

Auch die feste Anbindung der Partikel kann die Gleitfähigkeit signifikant erhöhen.

Durch das Herausragen aus der Oberfläche fungieren die aufgebrachten Partikel als Abstandshalter. Auf diese Weise wird ein Anhaften der sonst sehr glatten Beschichtungsoberflächen gegeneinander durch den sog. Glasplatteneffekt vermieden. Werden die Partikel in geringer Konzentration eingesetzt, wirkt sich ihr Vorhandensein in der Beschichtung nicht oder wenig auf die werkstoffmechanischen und physikalischen Eigenschaften wie z.B. den Glanzgrad der Beschichtung aus. Dieser genannte Effekt kann durch das erfindungsgemäße Verfahren erzielt werden, indem wenige Partikel pro Oberflächeneinheit auf ein Substrat oder in eine Beschichtung aufgebracht werden. Um diesen Effekt zu erzielen, ist ein Flächenanteil der Partikel auf der Oberfläche von weniger als 10%, vorzugsweise weniger als 5%.

Flächenanteile von höchstens 1% werden besonders bevorzugt, um eine Gleitwirkung zu erhalten. Ist der Flächenanteil hoch, wirken die Partikel zwar nach wie vor als Abstandhalter, andererseits erhöht sich aber auch die Kontaktfläche und der Glanzgrad wird vermindert (Mattierung). Ganz besonders bevorzugt sind Flächenanteile von weniger als 0,5%. Die Gleitwirkung kann auch bis zu sehr niedrigen Flächenanteilen bis 0,01%, vorzugsweise bis 0,05% wirksam bleiben. Besonders vorteilhaft ist die Aufbringung der Abstandshalter gezielt auf die Oberfläche der Beschichtung. Auf diese Weise kann auf eine hohe Konzentration der Partikel im Volumen des Beschichtungsmaterials verzichtet werden.

In einer Weiterbildung der Erfindung enthalten die polymeren Partikel zusätzlich Pigmente und/oder Farbstoffe. Dabei kann die Beschichtung bereichsweise unterschiedliche Partikel mit unterschiedlichen Pigmenten und/oder Farbstoffen enthalten. Alternativ und/oder zusätzlich enthalten die Partikel und/oder eine gegebenenfalls vorhandene zusätzliche Beschichtung Metallurpigmente. Somit können Metallic-Effekte erzeugt werden. Auch der Einsatz von thermochromen Pigmenten ist möglich. Entsprechende Beschichtungen können als Dekorschichten eingesetzt werden.

Alternativ oder zusätzlich können die polymeren Partikel Stoffe bzw. Partikel mit speziellen physikalischen Eigenschaften, beispielsweise magnetische Partikel und/oder leitfähige Partikel enthalten, so dass die rauen Beschichtungen entsprechende physikalische Eigenschaften aufweisen. Selbstverständlich können diese Merkmale auch kombiniert werden.

Die Erfindung sieht vor, dass zwischen dem Substrat und der rauen Beschichtung eine zweite polymere Schicht aufgebracht ist, an welcher die Partikel anhaften.

Die zweite polymere Beschichtung erhöht die Anhaftung der Partikel auf dem Substrat und kann als haftvermittelnde bzw. haftverstärkende Schicht ausgebildet sein.

Gemäß einer Ausführungsform sind die erste, d.h. die raue Schicht und die zweite Schicht an deren Grenzfläche miteinander zumindest teilweise vernetzt.

Eine Weiterbildung der Erfindung sieht vor, dass die polymeren Partikel der rauen Beschichtung eine Oberflächenfunktionalisierung, insbesondere eine Oberflächenfunktionalisierung durch hydrophile oder hydrophobe Gruppen aufweisen.

Des Weiteren betrifft die Erfindung eine Vorrichtung zur Herstellung einer rauen Beschichtung auf einem Substrat mittels Ink-Jet-Druck. Vorzugsweise werden bereits bedruckte oder bedrucktbare Substrate, wie insbesondere Druckerzeugnisse verwendet. Die erfindungsgemäße Vorrichtung umfasst einen Druckkopf sowie zumindest eine Lichtquelle, vorzugsweise eine UV- und/oder UV-VIS-Lichtquelle, wobei der Druckkopf eingerichtet ist, eine härtbare, fluide Zubereitung zur Verarbeitung mit Ink-Jet-Düsen als Tropfen abzugeben. Insbesondere ist der Druckkopf eingerichtet, separate, voneinander getrennte Tropfen abzugeben. Die Lichtquelle ist so positioniert, dass die abgegebenen Tropfen vor dem Auftreffen auf dem vom Druckkopf beabstandeten Substrat zumindest teilweise durch das von der Lichtquelle abgestrahlte Licht gehärtet werden und als Partikel auf das Substrat auftreffen.

Erfindungsgemäß umfasst die Vorrichtung zusätzlich eine Beschichtungseinrichtung zum Aufbringen einer zweiten fluiden, härtbaren, polymeren Beschichtung sowie eine Transporteinrichtung zum Vorbeibewegen des Substrats an der der Beschichtungseinrichtung und dem Druckkopf, so dass die vom Druckkopf ausgestoßenen und zumindest teilweise gehärteten Partikel auf die mit der Beschichtungseinrichtung aufgebrachte fluide Beschichtung treffen. Des Weiteren umfasst die Vorrichtung eine zweite Lichtquelle zum Härten der zweiten, fluiden Beschichtung mit den darauf aufgebrachten polymeren Partikeln, welche eine raue Beschichtung bilden.

Der Abstand vom Druckkopf beträgt bevorzugt 1 bis 5 mm, besonders bevorzugt 1 bis 3 mm. Bei diesen Abständen ist eine ausreichende Auflösung und Positioniergenauigkeit beim Druckvorgang gewährleistet. Gleichzeitig ermöglicht die daraus resultierende Flugzeit der Tropfen eine ausreichende Härtung der tropfenförmigen fluiden Zubereitung zur Verarbeitung mit Ink-Jet-Düsen während des Fluges.

Insbesondere ist der Druckkopf dazu eingerichtet, Tropfen mit einem Volumen im Bereich von 0,01 bis 500 Picolitern, bevorzugt mit einem Volumen bis zu 0,1 bis 150 Picolitern und besonders bevorzugt mit einem Volumen von 0,1 bis 25 Picolitern auszustoßen. Der Durchmesser der Tropfen bzw. der Partikel errechnet sich entsprechend aus den Volumina. In einer Ausführungsform der Erfindung umfasst die Vorrichtung mehrere Lichtquellen. Hierbei kann zumindest eine Lichtquelle Lichtleitfasern oder eine Laserquelle umfassen, deren Lichtaustrittsenden so angeordnet sind, dass das austretende Licht in den Bereich zwischen Druckkopf und Substrat eingestrahlt wird. Bevorzugt ist zumindest eine Lichtquelle derart angeordnet, dass die Lichtquelle die Strahlung in einem Winkel senkrecht bis parallel zur Fallrichtung der tropfenförmig abgegebenen fluiden Zubereitung zur Verarbeitung mit Ink-Jet-Düsen aussendet. In jedem Fall muss sichergestellt sein, dass die Lichtstrahlen nicht auf den eingesetzten Druckkopf auftreffen, da sonst die fluide Zubereitung in den Düsenöffnungen des Druckkopfes polymerisieren und damit die Düsen verstopfen kann. Eine Einstrahlung quer zur Fall- oder Flugrichtung, beziehungsweise eine seitliche Einstrahlung wird besonders bevorzugt, da dies die Einkopplung des Lichts in den Bereich vor den Düsen erleichtert. Dabei wird weiter bevorzugt, das Licht in Richtung entlang einer Düsenreihe, also einer linearen Anordnung mehrerer Düsen einzustrahlen. Mit anderen Worten wird also eine Lichtquelle eingesetzt, welche Licht quer zur Flugrichtung der Tropfen und entlang einer Reihe mehrerer beabstandeter Düsen abgibt.

In bevorzugter Ausgestaltung wird ein Laserscanner eingesetzt, wobei der Laserstrahl insbesondere die Tropfenaustrittsbereiche der Düsen abtastet bzw. scannt, so dass die Tropfen bevorzugt gezielt vom Laserstrahl getroffen werden können. Mit anderen Worten kann durch einen Scanner der Laserstrahl nacheinander zu denjenigen Düsen bewegt werden, welche gerade einen Tropfen ausgestoßen haben

Auch mit einem Laserstrahl, der parallel zu den eingesetzten Düsenreihen eingestrahlt wird, kann eine effiziente Härtung der Tropfen erzielt werden. Das Laserlicht wird hier dementsprechend entlang einer Reihe mehrerer beabstandeter Düsen gerichtet.

Alternativ oder kumulativ kann ein gepulster Laser, beziehungsweise ein Pulslaser eingesetzt werden, wobei der Laserstrahl gepulst und insbesondere mit dem Tropfenausstoß synchronisiert wird und somit wegen der sehr hohen Lichtintensitäten, die mit gepulsten Lasern erreichbar sind, zu einer besonders schnellen Härtung während des Tropfenflugs führen kann.

In einer weiteren Ausführungsform wird eine Lichtquelle oder werden beide eingesetzten Lichtquellen durch Elektronenstrahlvorrichtungen ersetzt, so dass die Tropfen und gegebenenfalls auch die bereits vorhandene Schicht auf der Oberfläche oder die gesamte Beschichtung bestehend aus den Partikeln und der gegebenenfalls bereits vorhandenen Beschichtung auf dem Substrat durch Elektronenstrahlen gehärtet werden.

Detaillierte Beschreibung der Erfindung

Nachfolgend wird die Erfindung an Hand der Figuren 1 bis 6 näher erläutert. Es zeigen:

Fig. 1 eine schematische Darstellung einer ersten Ausführungsform des erfindungsgemäßen Herstellungsverfahrens,

Fig. 2 eine schematische Darstellung einer zweiten Ausführungsform des erfindungsgemäßen Herstellungsverfahrens,

Fig. 3 eine schematische Darstellung einer erfindungsgemäßen rauen Beschichtung auf einem Substrat,

Fig. 4 eine schematische Darstellung einer Weiterbildung des erfindungsgemäß beschichteten Substrates, bei dem das Substrat zusätzlich eine zweite Beschichtung aufweist,

Fig. 5 eine schematische Darstellung einer Ausführungsform des erfindungsgemäß beschichteten Substrates, bei welcher die raue Beschichtung in Teilbereichen mehrere Teilschichten aufweist,

Fig. 6 und Fig. 7 schematische Darstellungen zweier weiterer Ausführungsformen des erfindungsgemäß beschichteten Substrates, bei welcher die Partikel der rauen Beschichtung in unterschiedlichen Teilbereichen unterschiedliche Härtungsgrade aufweisen,

Fig. 8, eine Variante der in Fig. 5 gezeigten Ausführungsform,

Fig. 9 eine Ausführungsform der Erfindung mit teilweise verlaufenen Partikeln.

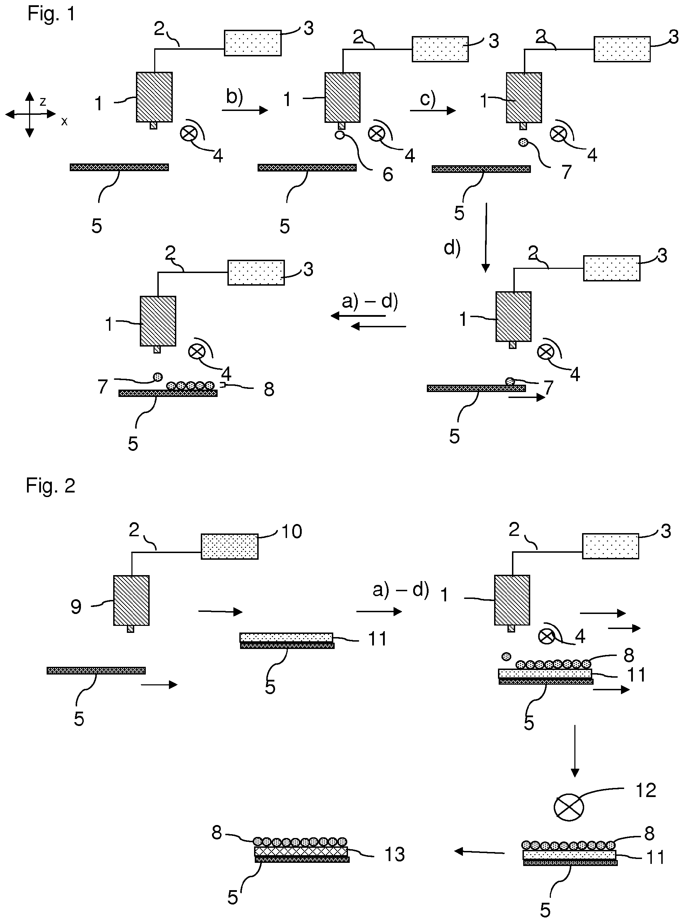

Fig. 1 zeigt stellt schematisch eine Ausführungsform des erfindungsgemäßen Herstellungsverfahrens dar, bei welcher die teilweise ausgehärteten Partikel 7 als eine raue Beschichtung 8 auf einem Substrat 5 abgeschieden werden. Dazu wird zunächst ein Substrat 5 bereitgestellt. Das Substrat wird mit einem festgelegten Abstand unter einen Ink-Jet-Druckkopf 1 positioniert, welcher über eine Zuleitung 2 mit einem Reservoir 3 enthaltend die fluide Zubereitung zur Verarbeitung mit Ink-Jet-Düsen verbunden ist. Des Weiteren ist eine Lichtquelle 4 so positioniert, dass die von der Lichtquelle 4 ausgesendete Strahlung in den Zwischenraum zwischen Druckkopf 1 und Substrat 5 strahlt (Schritt a)). Der Druckkopf 1 gibt die fluide Zubereitung zur Verarbeitung mit Ink-Jet-Düsen in Form von einzelnen Tropfen 6 ab, welche auf das Substrat 5 fallen (Schritt b)). Während des Fluges wird der Tropfen 6 durch die von der Lichtquelle 4 ausgesendeten Strahlung zumindest teilweise gehärtet (Schritt c)), so dass der zumindest teilweise gehärtete Tropfen bzw. Partikel 7 auf das Substrat auftrifft (Schritt d)). Durch geeignete Wahl der Form des Steuerpulses, mit welchem die Düse, vorzugsweise eine Piezo-Jet-Düse angesteuert wird, können pro Puls anstelle von einzelnen Tropfen auch mehrere Tropfen abgegeben werden. Dies entspricht gewissermaßen einem Versprühen der fluiden Zubereitung zur Verarbeitung mit Ink-Jet-Düsen durch die Ink-Jet-Düse. Dies ist besonders günstig, um kleine Partikel zu erzeugen.

Die Lichtquelle kann gemäß einer Ausführungsform der Erfindung auch gepulst betrieben werden. Dabei wird die Lichtabgabe vorzugsweise mit dem Tropfenaustoß synchronisiert, so dass der Lichtpuls den im Flug befindlichen Tropfen trifft. Die Lichtquelle kann eine oder mehrere gepulst betriebene Leuchtdioden umfassen. Insbesondere ist auch daran gedacht, einen Pulslaser als Lichtquelle 4 zu verwenden. Besonders bei niedrigeren Pulsfrequenzen bietet es sich an, die Abgabe der Laserpulse mit dem Tropfenausstoß zu synchronisieren, um die Tropfen im Flug mit einem Laserpuls zu treffen. Gemäß noch einer Ausführungsform der Erfindung kann auch ein Scanner vorgesehen sein, mit welchem der Lichtstrahl der Lichtquelle 4 auf den jeweiligen Tropfenausstoßbereich zwischen Düse und Substrat gerichtet wird, der von einem ausgestoßenen Tropfen durchquert wird. Beide Ausführungsformen sind unter anderem deshalb vorteilhaft, weil die Gesamtlichtmenge reduziert und damit die Gefahr vermindert wird, dass die härtbare fluide Zubereitung bereits an oder in den Düsen 9 aushärtet.

Das Substrat 5 wird in x-Richtung relativ zum Druckkopf bewegt und die Schritte a) bis d) wiederholt, so dass die einzelnen Partikel 7 auf dem Substrat 5 eine raue Beschichtung 8 bilden.

In der in Fig. 2 dargestellten Ausführungsform der Erfindung wird auf dem Substrat 5 zunächst mittels eines Druckkopfes 9 eine fluide, härtbare Beschichtung 11 als eine zweite Beschichtung abgeschieden. Der Druckkopf 9 ist dabei über eine Zuleitung 2 mit einem Reservoir 10 einer Beschichtungszubereitung verbunden. Die Beschichtungszubereitung kann dabei von der fluiden Zubereitung zur Verarbeitung mit Ink-Jet-Düsen verschieden sein, wobei dies eine Verarbeitbarkeit der entsprechenden Beschichtungszubereitung mit Ink-Jet-Düsen nicht ausschließt.

Nachfolgend wird auf das mit der fluiden, härtbaren Beschichtung 11 beschichtete Substrat 5 eine raue Beschichtung 8 analog zu dem in Fig. 1 gezeigten Verfahren abgeschieden. Das beschichtete Substrat 5 weist nach diesem Verfahrensschritt eine Beschichtung mit einer fluide, härtbare Schicht 11 sowie einer rauen, partikulären Schicht 8 als erste Beschichtung auf. In einem nachgeschalteten Verfahrensschritt wird die Schicht 11 durch die von der Lichtquelle 12 ausgesendeten Strahlung ausgehärtet und so in die ausgehärtete Schicht 13 umgewandelt. Dabei wird auch die raue Schicht 8 vollständig ausgehärtet, sofern nicht schon eine vollständige Härtung im Flug erfolgt ist.

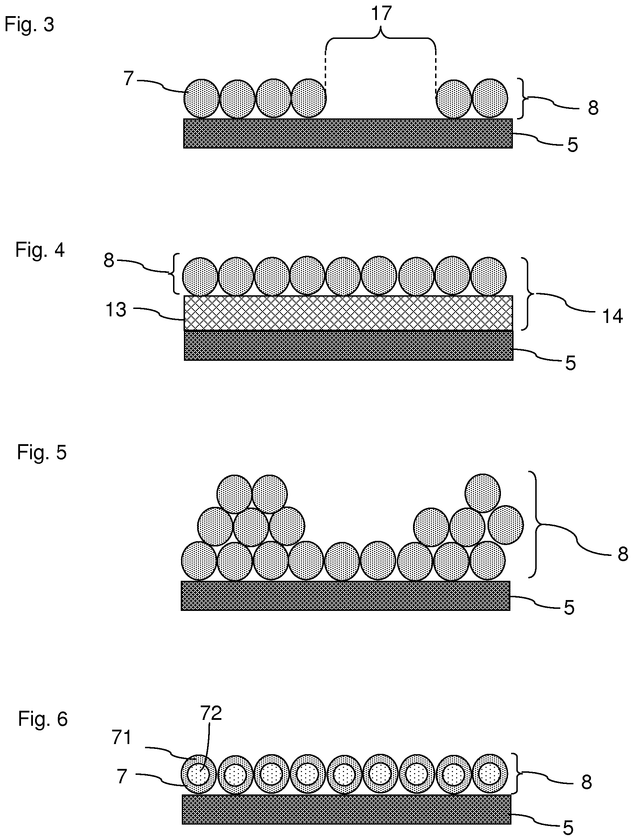

Fig. 3 zeigt eine schematische Darstellung eines Substrates 5 mit einer rauen Beschichtung 8, wobei die raue Beschichtung 8 aus einzelnen polymeren Partikeln 7 aufgebaut ist. Durch die kugelförmige oder zumindest weitgehend kugelförmige Form der polymeren Partikel 7 handelt es sich bei der Beschichtung 8 um eine raue Beschichtung, beziehungsweise wird eine raue Haptik erzeugt. Zudem ist die Beschichtung 8 auf Grund der Partikelform und der daraus resultierenden Packungsdichte der Partikel porös, wobei die Porosität der Beschichtung 8 abhängig von der Partikelgröße und/oder dem Vernetzungsgrad der Partikel untereinander ist.

Allgemein, ohne Beschränkung auf das in Fig.

3 gezeigte Beispiel ist die Erfindung besonders geeignet, um lateral, unter der Aussparung von Bereichen der Oberfläche, strukturierte Beschichtungen herzustellen. Fig. 3 zeigt einen ausgesparten Bereich 17. Solche nicht mit Partikeln versehene Bereiche können auch bei allen nachfolgend beschriebenen Ausführungsformen vorhanden sein. Auf diese Weise können bestimmte Bereiche der Oberfläche gezielt mit einer rauen Haptik versehen werden.

In Fig. 4 ist schematisch eine Weiterbildung der Erfindung gezeigt, bei der das Substrat 5 mit einer Beschichtung 14 beschichtet ist. Die Beschichtung 14 weist zwei Teilschichten 13 und 8 auf, wobei die Teilschicht 13 zwischen der rauen Teilschicht 8 und dem Substrat 5 angeordnet ist. Ein solches Erzeugnis kann hergestellt werden, indem das Substrat eine Beschichtung enthaltend ein drittes Präpolymer und/oder ein drittes Monomer mit einer dritten polymerisierbaren Gruppe aufweist. Dazu wird eine zweite Beschichtung aufgebracht, wobei die zweite Beschichtung nicht vor dem Auftreffen der Tropfen vollständig ausgehärtet wird, wobei die Beschichtung nach dem Auftreffen der Tropfen so ausgehärtet wird, dass die Tropfen an der Beschichtung anhaften.

Generell, ohne Beschränkung auf das dargestellte Ausführungsbeispiel ist es günstig, wenn die Dicke der Teilschicht 13 so gewählt wird, dass diese geringer ist, als der Durchmesser der Partikel, um zu vermeiden, dass die Partikel vollständig in die Teilschicht 13 einsinken. Der Durchmesser D der Partikel ergibt sich dabei gemäß der Beziehung

$$D = 2\sqrt[3]{\frac{3V}{4\pi}}$$

aus dem Volumen V der Partikel. So weist beispielsweise ein Partikel mit einem Volumen von 6 Picolitern einen Durchmesser von 22,5 um auf. Gegebenenfalls kann aber die Schichtdicke der Teilschicht 13 auch größer gewählt werden, wenn ein Einsinken der Partikel 7 nicht erfolgt.

Fig. 5 zeigt eine schematische Darstellung einer weiteren Ausführungsform des erfindungsgemäß beschichteten Substrates, bei welcher die raue Beschichtung 8 in Teilbereichen mehrere Teilschichten aufweist. Hierdurch können auf dem Substrat dreidimensionale Strukturen abgebildet werden, beziehungsweise die Schichtdicke der rauen Schicht kann größer sein als der Durchmesser der Partikel 7.

In Fig. 6 ist eine weitere Ausführungsform eines Substrates 5 mit einer rauen Beschichtung 8 schematisch dargestellt. In dieser Ausführungsform weisen die Partikel 7 der rauen Beschichtung 8 Teilbereiche 71 und 72 mit unterschiedlichen Härtungsgraden auf. Der Härtungsgrad im oberflächennahe Teilbereich 71 ist hierbei höher als der Härtungsgrad im inneren Teilbereich 72. Der äußere Teilbereich 71 bildet somit die feste Hülle der Partikel 7 und verleiht ihnen Formstabilität, während der innere Teilbereich 72 der Partikel eine geringe Viskosität aufweist. Eine derartige Beschichtung kann auch als drucksensitive Klebstoffschicht dienen, wenn der innere Teilbereich 72 für eine Verklebung geeignet ist und die Partikel 7 unter mechanischem Druck das Fluid in deren Inneren freisetzen.

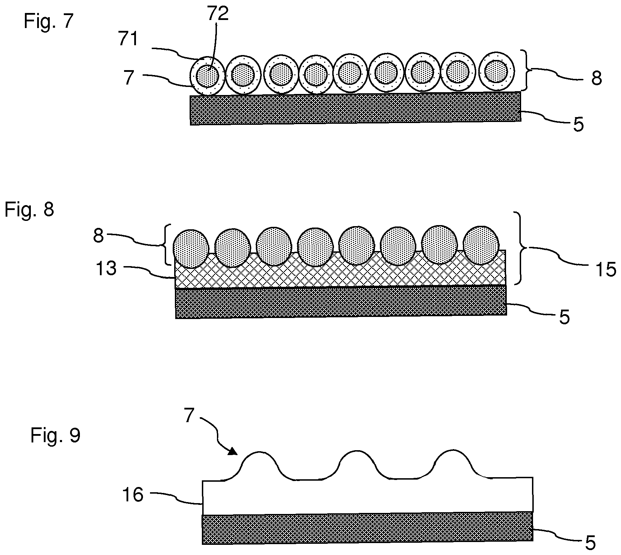

In Fig. 7 ist eine weitere Ausführungsform eines Substrates 5 mit einer rauen Beschichtung 8 schematisch dargestellt. In dieser Ausführungsform weisen die Partikel 7 der rauen Beschichtung 8 Teilbereich 71 und 72 mit unterschiedlichen Härtungsgraden auf. Der Härtungsgrad im oberflächennahe Teilbereich 71 ist hierbei niedriger als der Härtungsgrad im inneren Teilbereich 72. Der äußere Teilbereich 71 der Partikel 7 verleiht ihnen eine Klebrigkeit, während der innere Teilbereich 72 der Partikel eine höhere Viskosität aufweist.

Fig. 8 zeigt eine Weiterbildung der Erfindung, bei der das Substrat 5 mit einer Beschichtung 15 beschichtet ist. Die Beschichtung 15 weist zwei Teilschichten 13 und 8 auf, wobei die Teilschicht 13 zwischen der rauen Teilschicht 8 und dem Substrat 5 angeordnet ist und die Teilschicht 8 teilweise in die Teilschicht 13 eingebettet ist. Fig. 8 stellt damit eine Variante der in Fig. 5 gezeigten Ausführungsform dar, bei welcher die Partikel 7 in die zuvor aufgebrachte Teilschicht 13 teilweise eingesunken sind. Eine Anwendung der Ausführungsformen gemäß den Fig. 3 bis 8 kann dabei auch die Herstellung von Reflektorschichten sein. Die Reflektorschicht wird dabei durch die im wesentlichen kugelförmigen Partikel gebildet. Wird bei der in Fig. 8 gezeigten Ausführungsform die Teilschicht 13 lichtreflektierend ausgebildet, wird eine hoch effiziente Reflektorschicht erzeugt.

Fig. 9 zeigt eine Weiterbildung der Erfindung, bei dem das Substrat 5 eine Beschichtung 16 aufweist, deren Oberfläche Partikel 7 aufweist, die in ihrem zentralen Bereich ebenfalls kugelförmig oder allgemeiner konvex gewölbt sind, wobei der Übergang von den Partikeln 7 zu ebenen Bereichen der Beschichtungsoberfläche konkav geformt sind. Die Partikel sind also mit anderen Worten mit der Beschichtung teilweise verlaufen. Ohne Beschränkung auf das spezielle Ausführungsbeispiel kann eine solche Beschichtung hergestellt werden, indem die Tröpfchen nur teilweise während des Flugs ausgehärtet werden und auf eine nicht oder nur teilweise ausgehärtete Beschichtung treffen. Der Randwinkel der Tropfen kann durch unterschiedliche Oberflächenspannungen von Tropfen und Oberfläche beeinflusst werden. Je nach Oberflächenspannung der beteiligten Materialien können die Partikel 7 dabei auch vollständig von der Beschichtung umschlossen oder bedeckt werden. Eine solche Form der Partikel 7 auf der Oberfläche kann auch bei der in Fig. 8 gezeigten Ausführungsform erzielt werden, wenn auf Grund der Unterschiede der Oberflächenspannung der Materialien der Partikel 7 und der Teilschicht 13 das Beschichtungsmaterial der Teilschicht 13 die Partikel 7 benetzt.

Die Partikel und die Beschichtung werden dann zusammen vollständig ausgehärtet.

**Patentansprüche**

1.  Verfahren zur Herstellung von Polymerpartikeln, bei welchem unter Ansprechen auf elektrische Signale mittels eines Ink-Jet-Druckkopfs mit zumindest einer Düse eine erste fluide Zubereitung zur Verarbeitung mit Ink-Jet-Düsen, umfassend mindestens einen Vertreter aus der Gruppe der Präpolymere, Oligomere und Monomere, sowie einen Reaktivverdünner und mindestens einen Photoinitiator, wobei der Vertreter aus der ersten Gruppe zumindest eine erste polymerisierbare Gruppe aufweist, die radikalisch polymerisierbar ist, und die fluide Zubereitung in Form von Tropfen aus der Düse ausgestoßen und mittels einer Strahlungsquelle Strahlung auf die im Flug befindlichen Tropfen gerichtet wird, wobei die fluide Zubereitung zur Verarbeitung mit Ink-Jet-Düsen unter Einwirkung der Strahlung zumindest teilweise aushärtet, so dass vor dem Auffangen oder Auftreffen aus den fluiden Tropfen Partikel erhalten werden.

2.  Verfahren gemäß Anspruch 1 zur Herstellung von rauen, polymeren Beschichtungen auf einem Substrat mittels Ink-Jet-Druck mit zumindest den folgenden Schritten a) bis d)

    a) Bereitstellen des Substrates und der fluiden Zubereitung zur Verarbeitung mit Ink-Jet-Düsen
    b) dosiertes Austreten der fluiden Zubereitung zur Verwendung mit Ink-Jet-Düsen durch den Druckkopf, wobei der Druckkopf die fluide Zubereitung zur Verwendung mit Ink-Jet-Düsen als voneinander getrennte Tropfen freisetzt und
    c) die freigesetzten Tropfen vom Druckkopf auf das vom Druckkopf beabstandete Substrat für die Dauer der Flugzeit fallen, wobei die Tropfen innerhalb der Flugzeit durch Strahlung zumindest teilweise gehärtet werden, indem mittels der Strahlungsquelle die Strahlung in den Bereich zwischen dem Druckkopf und dem Substrat eingestrahlt wird, und
    d) als zumindest teilweise ausgehärtete polymere, kugelförmig ausgebildete Partikel auf das Substrat auftreffen, wobei eine raue Beschichtung gebildet wird.

3.  Verfahren gemäß einem der vorstehenden Ansprüche, wobei eine Strahlungsquelle verwendet wird, die Licht im UV-VIS-Bereich, bevorzugt Licht mit einer Wellenlänge im Bereich von 150 bis 700 nm, bevorzugt von 200 bis 500 nm oder mit einer Wellenlänge im Bereich von 350 bis 700 nm, aussendet.

4.  Verfahren gemäß einem der vorherigen Ansprüche, wobei das Monomer in der fluiden Zubereitung zur Verarbeitung mit Ink-Jet-Düsen zusätzlich zumindest eine zweite polymerisierbare Gruppe aufweist oder die fluide Zubereitung zur Verarbeitung mit Ink-Jet-Düsen ein zweites Präpolymer und/oder ein zweites Monomer mit einer zweiten polymerisierbaren Gruppe aufweist, wobei die zweite polymerisierbare Gruppe gegenüber den Polymerisierungsbedingungen der ersten polymerisierbaren Gruppe inert ist, wobei während des Fluges die erste polymerisierbare Gruppe polymerisiert und die zweite polymerisierbare Gruppe in einem nachfolgenden Verfahrensschritt polymerisiert wird.

5.  Verfahren gemäß einem der vorherigen Ansprüche, wobei die Flugzeit maximal 10 ms beträgt und/oder die in Schritt b) gebildeten Tropfen eine Geschwindigkeit von 0,5 bis 14 m/s aufweisen.

6.  Verfahren gemäß Anspruch 4, wobei das in Schritt a) bereitgestellte Substrat eine Beschichtung enthaltend ein drittes Präpolymer und/oder ein drittes Monomer mit einer dritten polymerisierbaren Gruppe aufweist, indem eine Beschichtung aufgebracht wird, wobei die Beschichtung nicht vor dem Auftreffen der Tropfen vollständig ausgehärtet wird, wobei die Beschichtung nach dem Auftreffen der Tropfen so ausgehärtet wird, dass die Tropfen an der Beschichtung anhaften.

7.  Verfahren gemäß Anspruch 6, wobei die dritte polymerisierbare Gruppe in Schritt c) oder in einem dem Schritt d) nachfolgenden Schritt e) polymerisiert wird und/oder die zweite und die dritte polymerisierbare Gruppe e) gleichzeitig polymerisiert werden.

8.  Verfahren gemäß einem der Ansprüche 2 bis 7, wobei die die Beschichtung lateral strukturiert aufgebracht wird und/oder die Schritte c) und d) auf Teilbereichen des beschichteten Substrates wiederholt werden, so dass eine dreidimensional strukturierte Beschichtung erhalten wird.

9.  Druckerzeugnis, umfassend ein bedrucktes oder bedruckbares Substrat mit einer ersten, rauen, polymeren Beschichtung, wobei die erste Beschichtung durch polymere, kugelförmige ausgebildete Partikel, herstellbar mit einem Verfahren gemäß einem der vorherigen Ansprüche, gebildet wird und wobei zwischen dem Substrat und der ersten, rauen Beschichtung eine zweite polymere Beschichtung aufgebracht ist, an welcher die Partikel anhaften.

10. Druckerzeugnis gemäß Anspruch 9, wobei die polymeren Partikel ein durchschnittliches Volumen von 0,01 bis 500 Picolitern aufweisen.

11. Druckerzeugnis gemäß einem der Ansprüche 9 bis 10, wobei die polymeren Partikel untereinander vernetzt sind.

12. Druckerzeugnis gemäß einem der Ansprüche 9 bis 11, wobei die polymeren Partikel Farbmittel, Farbpigmente, Farbstoffe und/oder Metallurpigmente enthalten, wobei unterschiedliche polymere Partikel unterschiedliche Pigmente enthalten.

13. Druckerzeugnis gemäß einem der Ansprüche 9 bis 12, wobei die polymeren Partikel bereichsweise magnetische und/oder leitfähige Partikel enthalten.

14. Druckerzeugnis gemäß einem der Ansprüche 9 bis 13, wobei die erste und die zweite Beschichtung an der Grenzfläche miteinander zumindest teilweise vernetzt sind und/oder die erste und/oder die zweite Beschichtung bereichsweise unterschiedliche Schichtdicken aufweisen.

15. Druckerzeugnis gemäß einem der Ansprüche 9 bis 14, wobei die Oberfläche der ersten, rauen Beschichtung polymere Partikel (7) aufweist, die in ihrem zentralen Bereich kugelförmig sind, wobei der Übergang von den polymeren Partikeln (7) zu ebenen Bereichen der Beschichtungsoberfläche konkav geformt ist.

16. Druckerzeugnis gemäß einem der Ansprüche 9 bis 15, wobei die polymeren Partikel der ersten, rauen Beschichtung eine Oberflächenfunktionalisierung, bevorzugt eine Oberflächenfunktionalisierung durch hydrophile oder hydrophobe Gruppen aufweisen und/oder Ankergruppen enthält.

17. Druckerzeugnis gemäß einem der Ansprüche 9 bis 16, wobei die erste, raue Beschichtung abhängig von der Flächendichte der Partikel und/oder der Partikelgröße bereichsweise Matteffekte, Glanzeffekte und/oder haptische Effekte, wobei der haptische Effekt vorzugsweise ein Soft-Touch-Effekt oder ein Sandlack-Effekt ist, aufweist.

18. Druckerzeugnis gemäß einem der Ansprüche 9 bis 17, wobei der Flächenanteil der Partikel auf der Oberfläche höchstens 1% beträgt.

19. Vorrichtung zur Herstellung einer ersten, rauen Beschichtung auf einem Substrat mittels Ink-Jet-Druck mit einem Druckkopf sowie zumindest einer Lichtquelle, vorzugsweise einer UV-Lichtquelle und/oder UV-VIS-Lichtquelle, wobei der Druckkopf eingerichtet ist, eine fluide Zubereitung zur Verarbeitung mit Ink-Jet-Düsen als Tropfen abzugeben und die Lichtquelle so positioniert ist, dass die Tropfen vor dem Auftreffen auf dem vom Druckkopf beabstandeten Substrat zumindest teilweise durch von der Lichtquelle abgestrahltes Licht gehärtet werden, **gekennzeichnet durch** eine Beschichtungseinrichtung zum Aufbringen einer zweiten, fluiden und härtbaren Beschichtung, sowie einer Transporteinrichtung zum Vorbeibewegen des Substrats an der Beschichtungseinrichtung und dem Druckkopf, so dass die vom Druckkopf ausgestoßenen und zumindest teilweise gehärteten Tropfen auf die mit der Beschichtungseinrichtung aufgebrachte zweite Beschichtung treffen, sowie eine zweite Lichtquelle zum Härten der zweiten Beschichtung mit den aufgebrachten Tropfen.

20. Vorrichtung gemäß Anspruch 19, wobei der Abstand vom Druckkopf zum Substrat 1 bis 5 mm beträgt und/oder der Druckkopf Tropfen mit einem Volumen im Bereich von 0,01 bis 500 Picoliter erzeugt.

21. Vorrichtung gemäß einem der Ansprüche 19 bis 20, wobei die Vorrichtung mehrere Lichtquellen, bevorzugt zumindest eine Laser- und/oder LED-Lichtquelle und besonders bevorzugt zumindest einen Laserscanner und/oder einen Pulslaser umfasst.

22. Vorrichtung gemäß einem der Ansprüche 19 bis 21, **gekennzeichnet durch** eine Lichtquelle, welche Licht quer zur Flugrichtung der Tropfen und vorzugsweise entlang einer Reihe mehrerer beabstandeter Düsen abgibt und/oder zumindest eine Lichtquelle Lichtleitfasern umfasst, deren Lichtaustrittsenden so angeordnet sind, dass das austretende Licht in den Bereich zwischen Druckkopf und Substrat eingestrahlt wird.

**Claims**

1. A method for producing polymer particles, in which in response to electrical signals, by means of an inkjet print head with at least one nozzle, a first fluid preparation for processing with inkjet nozzles, comprising at least one representative from the group of prepolymers, oligomers and monomers, and also a reactive diluent and at least one photoinitiator, wherein the representative from the first group has at least a first polymerisable group which is radically polymerisable, and the fluid preparation is ejected from the nozzle in the form of droplets and radiation is directed onto the droplets which are in flight by means of a radiation source, wherein the fluid preparation for processing with inkjet nozzles at least partly cures under the action of the radiation, so that particles are obtained from the fluid droplets prior to collection or impact [sic].

2. A method according to claim 1 for producing rough polymeric coatings on a substrate by means of inkjet printing, comprising at least the following steps a) to d)

a) providing the substrate and the fluid preparation for processing with inkjet nozzles

b) metered release of the fluid preparation for use with inkjet nozzles through the print head, wherein the print head releases the fluid preparation for use with inkjet nozzles as droplets which are separate from each other, and

c) the released droplets drop from the print head onto the substrate, which is at a distance from the print head, for the duration of the time of flight, the droplets within the time of flight being at least partly hardened by radiation in that the radiation is beamed into the region between the print head and the substrate by means of the radiation source, and

d) strike the substrate as at least partly cured polymeric, spherically shaped particles, forming a rough coating.

3. A method according to one of the preceding claims, wherein a radiation source which emits light in the UV-VIS range, preferably light having a wavelength in the range from 150 to 700 nm, preferably of 200 to 500 nm, or having a wavelength in the range from 350 to 700 nm, is used.

4. A method according to one of the preceding claims, wherein the monomer in the fluid preparation for processing with inkjet nozzles additionally has at least a second polymerisable group or the fluid preparation for processing with inkjet nozzles has a second prepolymer and/or a second monomer having a second polymerisable group, wherein the second polymerisable group is inert with respect to the polymerisation conditions of the first polymerisable group, wherein during the flight the first polymerisable group is polymerised and the second polymerisable group is polymerised in a subsequent method step.

5. A method according to one of the preceding claims, wherein the time of flight is a maximum of 10 ms and/or the droplets formed in step b) have a velocity of 0.5 to 14 m/s.

6. A method according to claim 4, wherein the substrate provided in step a) has a coating containing a third prepolymer and/or a third monomer having a third polymerisable group, in that a coating is applied, wherein the coating is not completely cured prior to the impact of the droplets, wherein the coating after the impact of the droplets is cured in such a way that the droplets adhere to the coating.

7. A method according to claim 6, wherein the third polymerisable group in step c) or in a step e) following step d) is polymerised and/or the second and the third polymerisable groups e) are polymerised simultaneously.

8. A method according to one of claims 2 to 7, wherein the coating is applied in a laterally textured manner and/or steps c) and d) are repeated on partial regions of the coated substrate, so that a three-dimensionally textured coating is obtained.

9. A printed product, comprising a printed or printable substrate with a first, rough, polymeric coating, wherein the first coating is formed by polymeric, spherically shaped particles, which can be manufactured using a method according to one of the preceding claims, and wherein a second polymeric coating to which the particles adhere is applied between the substrate and the first, rough, coating.

10. A printed product according to claim 9, wherein the polymeric particles have an average volume of 0.01 to 500 picolitres.

11. A printed product according to one of claims 9 to 10, wherein the polymeric particles are cross-linked with each other.

12. A printed product according to one of claims 9 to 11, wherein the polymeric particles contain colourants, coloured pigments, dyes and/or Metallur pigments, wherein different polymeric particles contain different pigments.

13. A printed product according to one of claims 9 to 12, wherein the polymeric particles in regions contain magnetic and/or conductive particles.

14. A printed product according to one of claims 9 to 13, wherein the first and the second coatings are at least partly cross-linked together at the interface and/or the first and/or the second coating in regions have different layer thicknesses.

15. A printed product according to one of claims 9 to 14, wherein the surface of the first, rough, coating includes polymeric particles (7) which are spherical in their central region, wherein the transition from the polymeric particles (7) to flat regions of the coating surface is concave in shape.

16. A printed product according to one of claims 9 to 15, wherein the polymeric particles of the first, rough, coating have surface functionalisation, preferably surface functionalisation by hydrophilic or hydrophobic groups, and/or contains [sic] anchor groups.

17. A printed product according to one of claims 9 to 16, wherein the first, rough, coating, dependent on the surface density of the particles and/or on the particle size, in regions has matt effects, gloss effects and/or haptic effects, wherein the haptic effect is preferably a soft-touch effect or a sand lacquer effect.

18. A printed product according to one of claims 9 to 17, wherein the proportion by area of the particles on the surface is at most 1%.

19. A device for producing a first, rough, coating on a substrate by means of inkjet printing with a print head and at least one light source, preferably a UV light source and/or UV-VIS light source, wherein the print head is set up to emit a fluid preparation for processing with inkjet nozzles as droplets and the light source is positioned such that the droplets prior to impact on the substrate, which is at a distance from the print head, are at least partly hardened by light emitted by the light source, **characterised by** a coating means for applying a second, fluid and hardenable coating, and also a transport means for moving the substrate past the coating means and the print head, so that the at least partly hardened droplets ejected from the print head strike the second coating applied with the coating means, and a second light source for hardening the second coating with the applied droplets.

20. A device according to claim 19, wherein the distance from the print head to the substrate is 1 to 5 mm and/or the print head produces droplets of a volume in the range from 0.01 to 500 picolitres.

21. A device according to one of claims 19 to 20, wherein the device comprises a plurality of light sources, preferably at least one laser and/or LED light source and particularly preferably at least a laser scanner and/or a pulsed laser.

22. A device according to one of claims 19 to 21, **characterised by** a light source which emits light transversely to the direction of flight of the droplets and preferably along a series of several spaced-apart nozzles and/or at least one light source comprises optical fibres, the light exit ends of which are arranged such that the emerging light is beamed into the region between the print head and substrate.

**Revendications**

1. Procédé de fabrication de particules de polymère, dans lequel, en réponse à des signaux électriques et au moyen d'une tête d'impression à jet d'encre avec au moins une buse, une première préparation fluide pour un traitement avec des buses à jet d'encre, comprenant au moins un agent du groupe des prépolymères, oligomères et monomères, ainsi qu'un diluant réactif et au moins un photoamorceur, où l'agent du premier groupe présente au moins un premier groupe polymérisable, qui est polymérisable par voie radicalaire, et la préparation fluide est expulsée hors de la buse sous la forme de gouttes et un rayonnement est orienté vers les gouttes se trouvant en vol au moyen d'une source de rayonnement, où la préparation fluide pour le traitement avec des buses à jet d'encre durcit au moins partiellement sous l'action du rayonnement, de sorte que des particules soient obtenues à partir des gouttes fluides avant qu'elles ne soient recueillies ou percutées.

2. Procédé selon la revendication 1 de fabrication de revêtements polymères rugueux sur un substrat au moyen d'une impression à jet d'encre avec au moins les étapes a) à d) suivantes

   a) fourniture du substrat et de la préparation fluide pour le traitement avec des buses à jet d'encre
   b) émission dosée de la préparation fluide à travers la tête d'impression pour une utilisation avec des buses à jet d'encre, où la tête d'impression libère la préparation fluide en tant que gouttes séparées les unes des autres pour l'utilisation avec des buses à jet d'encre et
   c) les gouttes libérées tombent depuis la tête d'impression sur le substrat espacé de la tête d'impression pendant la durée du temps de vol, où les gouttes sont au moins partiellement durcies par rayonnement pendant le temps de vol en ce que le rayonnement est irradié dans la région entre la tête d'impression et le substrat au moyen de la source de rayonnement, et
   d) des particules de forme sphérique en tant que polymères au moins partiellement durcis percutent le substrat, où un revêtement rugueux est formé.

3. Procédé selon l'une des revendications précédentes, dans lequel une source de rayonnement est utilisée qui envoie une lumière dans la plage UV-visible, de préférence une lumière avec une longueur d'onde dans la plage de 150 à 700 nm, de préférence de 200 à 500 nm ou avec une longueur d'onde dans la plage de 350 à 700 nm.

4. Procédé selon l'une des revendications précédentes, dans lequel le monomère dans la préparation fluide pour le traitement avec des buses à jet d'encre présente en outre au moins un deuxième groupe polymérisable ou la préparation fluide pour le traitement avec des buses à jet d'encre présente un deuxième prépolymère et/ou un deuxième monomère, avec un deuxième groupe polymérisable, où le deuxième groupe polymérisable est inerte vis-à-vis des conditions de polymérisation du premier groupe polymérisable, où le premier groupe polymérisable est polymérisé pendant le vol et le deuxième groupe polymérisable est polymérisé dans une étape de procédé suivante.

5. Procédé selon l'une des revendications précédentes, dans lequel le temps de vol est au maximum de 10 ms et/ou les gouttes formées à l'étape b) présentent une vitesse de 0,5 à 14 m/s.

6. Procédé selon la revendication 4, dans lequel le substrat fourni à l'étape a) présente un revêtement contenant un troisième prépolymère et/ou un troisième monomère, avec un troisième groupe polymérisable, en ce qu'un revêtement est appliqué, où le revêtement n'est pas complètement durci avant que les gouttes ne soient percutées, où le revêtement est durci après que les gouttes ont été percutées de sorte que les gouttes adhèrent au revêtement.

7. Procédé selon la revendication 6, dans lequel le troisième groupe polymérisable est polymérisé à l'étape c) ou à une étape e) qui suit l'étape d) et/ou le deuxième et le troisième groupe polymérisable sont polymérisés simultanément e).

8. Procédé selon l'une des revendications 2 à 7, dans lequel le revêtement est appliqué en étant structuré latéralement et/ou les étapes c) et d) sont répétées sur des régions partielles du substrat revêtu, de sorte que soit obtenu un revêtement structuré de façon tridimensionnelle.

9. Objet imprimé, comprenant un substrat imprimé ou imprimable avec un premier revêtement polymère rugueux, dans lequel le premier revêtement est formé par des particules polymères de forme sphérique qui peuvent être fabriquées avec un procédé selon l'une des revendications précédentes, et dans lequel entre le substrat et le premier revêtement rugueux est appliqué un second revêtement polymère auquel adhèrent les particules.

10. Objet imprimé selon la revendication 9, dans lequel les particules polymères présentent un volume moyen de 0,01 à 500 picolitres.

11. Objet imprimé selon l'une des revendications 9 à 10, dans lequel les particules polymères sont réticulées entre elles.

12. Objet imprimé selon l'une des revendications 9 à 11, dans lequel les particules polymères contiennent des substances colorantes, des pigments colorants, des matières colorantes et/ou des pigments métalliques, où des particules polymères différentes contiennent des pigments différents.

13. Objet imprimé selon l'une des revendications 9 à 12, dans lequel les particules polymères contiennent par endroits des particules magnétiques et/ou conductrices.

14. Objet imprimé selon l'une des revendications 9 à 13, dans lequel le premier et le second revêtement sont au moins partiellement réticulés ensemble au niveau de la surface limite et/ou le premier et/ou le second revêtement présentent par endroits des épaisseurs de couche différentes.

15. Objet imprimé selon l'une des revendications 9 à 14, dans lequel la surface du premier revêtement rugueux présente des particules (7) polymères qui sont sphériques dans leur région centrale, où le passage depuis les particules (7) polymères jusqu'à des régions planes de la surface de revêtement est formé de façon concave.

16. Objet imprimé selon l'une des revendications 9 à 15, dans lequel les particules polymères du premier revêtement rugueux présentent une fonctionnalisation de surface, de préférence une fonctionnalisation de surface par des groupes hydrophiles ou hydrophobes et/ou contient des groupes d'ancrage.

17. Objet imprimé selon l'une des revendications 9 à 16, dans lequel le premier revêtement rugueux présente par endroits, en fonction de l'épaisseur de surface des particules et/ou de la taille de particule, des effets mats, des effets brillants et/ou des effets haptiques, où l'effet haptique est de préférence un effet de toucher doux ou un effet *sandlack.*

18. Objet imprimé selon l'une des revendications 9 à 17, dans lequel la proportion de surface des particules sur la surface est au plus de 1 %.

19. Dispositif de fabrication d'un premier revêtement rugueux sur un substrat au moyen d'une impression à jet d'encre avec une tête d'impression ainsi qu'au moins une source de lumière, de préférence une source de lumière UV et/ou une source de lumière UV-visible, dans lequel la tête d'impression est aménagée afin de transmettre sous forme de gouttes une préparation fluide pour le traitement avec des buses à jet d'encre et la source de lumière est positionnée de sorte que les gouttes soient durcies au moins partiellement par la lumière émise par la source de lumière avant qu'elles ne percutent le substrat espacé de la tête d'impression, **caractérisé par** un équipement de revêtement destiné à appliquer un second revêtement fluide et durcissable, ainsi qu'un équipement de transport pour déplacer le substrat en passant devant l'équipement de revêtement et la tête d'impression, de sorte que les gouttes expulsées depuis la tête d'impression et au moins partiellement durcies percutent le second revêtement appliqué avec l'équipement de revêtement, ainsi qu'une seconde source de lumière pour durcir le second revêtement avec les gouttes appliquées.

20. Dispositif selon la revendication 19, dans lequel l'espacement depuis la tête d'impression jusqu'au substrat est de 1 à 5 mm et/ou la tête d'impression produit des gouttes avec un volume dans la plage allant de 0,01 à 500 picolitres.

21. Dispositif selon l'une des revendications 19 à 20, où le dispositif comprend plusieurs sources de lumière, de préférence au moins une source de lumière laser et/ou DEL et particulièrement de préférence au moins un scanner laser et/ou un laser pulsé.

22. Dispositif selon l'une des revendications 19 à 21, **caractérisé par** une source de lumière, laquelle transmet de la lumière transversalement à la direction de vol des gouttes et de préférence le long d'une rangée de plusieurs buses espacées et/ou au moins une source de lumière comprend des fibres optiques dont les extrémités d'émission de lumière sont agencées de sorte que la lumière émise soit irradiée dans les régions entre la tête d'impression et le substrat.

Fig. 1

Fig. 2

Fig. 3

Fig. 4

Fig. 5

Fig. 6

Fig. 7

72

71

7

8

5

Fig. 8

8

13

15

5

Fig. 9

7

16

5

**IN DER BESCHREIBUNG AUFGEFÜHRTE DOKUMENTE**

**In der Beschreibung aufgeführte Patentdokumente**

- WO 2011077200 A1
- DE 102010063982 A1
- WO 2012049428 A
- GB 2233928 B
- US 5059266 A
- EP 1037716 B1
- DE 69822201 T2